# EUROPEAN PATENT SPECIFICATION

(11) **EP 2 195 816 B1**
(45) Date of publication and mention of the grant of the patent: **13.02.2013**
(21) Application number: 08800228.2
(22) Date of filing: 01.10.2008
(51) Int. Cl.: H01F 27/32, H01F 41/12, H02K 3/34, H02K 3/52

(54) **PROCESS AND ARRANGEMENT FOR ELECTRICALLY INSULATING A COIL OF AN ELECTRIC DEVICE**
VERFAHREN UND ANORDNUNG FÜR ELEKTRISCHE ISOLIERUNG EINER SPULE IN EINEM ELEKTRISCHEN GERÄT
PROCEDE ET ENSEMBLE POUR ISOLER ELECTRIQUEMENT UNE BOBINE D'UN DISPOSITIF ELECTRIQUE

(30) Priority: 02.10.2007 BR PI0706119
(43) Date of publication of application: 16.06.2010
(73) Proprietor: Whirlpool S.A., São Paulo - SP 04578-000 (BR)
(72) Inventor: PACHECO, Anderson Ricardo, 89218-005 Joinville - SC (BR); HÜLSE, Emílio Rodrigues, 89204-040 Joinville - SC (BR); HILLE, Claudio Roberto, 89217-170 Joinville - SC (BR); LILIE, Dietmar Erich Bernhard, 89204-060 Joinville - SC (BR)
(74) Representative: Geyer, Fehners & Partner
(86) International application number: PCT/BR2008/000299
(87) International publication number: WO 2009/043129

(56) References cited:
- EP-A- 0 080 974
- WO-A-93/15516
- GB-A- 1 038 932
- GB-A- 2 102 210
- GB-A- 2 125 227
- US-A- 3 533 037

## Description

### Field of the Invention

The present invention refers to a process and an arrangement for electrically insulating a coil of an electric device of the type which comprises a reel having a central hub carrying end flanges, a coil winding, and an external lamination stack. The present invention refers, more specifically, to a process for insulating the coil winding of a stator of an electric motor, which is particularly of the type used in refrigeration compressors.

### Background of the Invention

Electric motor stators, for example of the type used in refrigeration compressors, are generally formed by a coil winding which is formed in a reel, and by a lamination stack which is external to said coil winding. In the application of the electric motor in refrigeration compressors, said electric motor is mounted in the interior of a hermetic casing. Although the present solution is used for insulating coils of any electric device of the type comprising a reel, generally in electric insulating material, having a central hub incorporating end flanges and carrying a coil winding, and a metallic lamination stack external to the reel and to the coil winding, the present invention will be described considering a stator of an electric motor, particularly of the type used in refrigeration compressors.

The electric motors, for example of the linear type, which are applied in compressors, comprise, in addition to the stator, an actuating means formed by a base portion affixed to a piston of the compressor, and an impelling portion, which supports a magnetic member in place of the rotor of the rotary motors (not linear motors).

The electric motor stator generally comprises a reel, made of an electric insulating material and which presents a tubular central hub, having a first end incorporating a first flange and a second end incorporating a second flange, said first and second flanges being parallel to one another and orthogonal to the axis of the central hub. In the formation of the stator, the reel receives and houses, around the central hub and between its first and second flanges, a winding of a conducting wire, usually a conducting wire with a predetermined thickness, said winding (or coil) being dimensioned to provide a certain filling degree of the reel. The filling of the annular tubular volume of the reel, defined between the two end flanges and around the central hub with the conducting wire in the formation of the stator, is one of the parameters that define the electric motor efficiency.

However, in order to maximize the filling of the reel with the conducting wire, determining a high filling factor, it is necessary to consider determined safety rules established for electric motors, particularly when they are used in refrigeration compressors, and which guarantee the electric insulation of the motor stator, preventing short-circuits and current leakages which can reach the metallic parts of the compressor (such as the lamination stack) and with the risk of causing electric shocks.

These rules require a minimum safety distance to be kept between the coil windings and the adjacent metallic elements, generally defined by the lamination stack, between about 1.6mm for insulation through the air (through-space insulation) and 6.4mm for insulation through the surface (over-surface insulation), which values can vary as a function of the motor nominal voltage. In the case of coils presenting coil wires secured by the condition of the winding, which requires a certain tension applied to the wire, for compacting and pressing the coil on the reel, the minimum distance to be respected should be 2.4mm, provided that the measurements are taken in a straight line and that there is no barrier between the conducting wire and grounded part, or metallic part. In case an insulating physical barrier exists, said barrier must produce a path at minimum of 4.8mm between any point of the winding and an adjacent metallic part, i.e., the electric current path along this barrier, in order to reach any metallic part, must be a minimum of 4.8mm, and 2.4mm in case said distance is considered in open space, without a barrier between the conducting wire and the metallic part.

In some especial constructions, as is the case of refrigeration compressor stators, the safety distance required between the conducting wire and the adjacent metallic part, is 2.4mm.

For such stator constructions, the required distance is obtained by placing a smaller amount of conducting wire in the motor, said wire amount being calculated so that the distance from the last layer of conducting wire (the outermost layer) to the lamination stack is at minimum of 2.4mm.

In these constructions, the electric motor stator is formed with a filling factor that does not correspond to the total or maximum filling capacity of the reel, so that said minimum insulating distance is obtained by through-space insulation. In these cases, the peripheral side surface of the conducting wire winding is spaced back in relation to the alignment of the peripheral edges of the end flanges of the reel, this spaced back condition defining an air volume which acts as an electric insulation.

For maintaining the winding condition of the conducting wire in the reel, upon winding completion, there is provided, around the peripheral side surface of the winding, a generally adhesive insulating tape, which surrounds, in multiple turns, at least part of the axial extension of said peripheral side surface of the conducting wire winding. In this case, the insulating tape is usually placed disregarding insulating aspects, i.e., only considering the finishing and retaining function, said insulating tape being applied around the conducting wires, so that the side edges of the different turns of said tape around the winding are axially adjacent to one another, in a way sufficient to prevent an outer end of the conducting wire winding from being loose and free within the insulating air volume of said reel. In practice, the outer insulating tape allows the formation of small slots on the conducting wire winding, generally adjacent to the first and second end flanges. Since said last (outermost) insulating tape only secures the conducting wire on the reel, not having an insulating function, it need not have a width that totally covers the winding axial extension defined between the first and the second end flanges. In this case, once the insulating factor is defined only by the air volume formed around the coil winding, there is a loss in the filling factor of the conducting wire, with a consequent loss in the motor efficiency (in constructions which require a high filling factor, the electric insulating barrier must not be the air, it being necessary to use a physical barrier, such as an insulating tape).

In order to improve the filling factor, the insulating tape should have a width superior to the distance between the end flanges of the reel, so that its side edges define insulating barriers capable of providing a current path between the coil winding and an adjacent metallic part, at minimum of 2.4mm. Since the tape side edges are only adjacent to the end flanges, they do not define an insulating barrier at minimum of 2.4mm for the current path between the conducting wire, external and adjacent to a respective end flange of the reel, and the adjacent portion of the metal lamination stack. However, the application of an insulating tape with a width larger than the distance between the two end flanges, would cause wrinkles in the peripheral edge region and in the outer face of each end flange of the reel, which are unacceptable, considering the available dimensions in refrigeration compressor motors. Besides the drawback above, even the precise cutting of the tape width, aiming at preventing slots close to the end flanges, requires especial and costly cares to produce the stator. It should be pointed out that eliminating the slots close to the end flanges does not guarantee the increase of the insulating barrier for the outer and end conducting wires.

GB 2 125 227 A describes a transformer comprising a laminated core the central limb of which carries a rigid insulating bobbin on which are concentrically wound the primary and secondary windings. These windings are isolated from one another by a layer of insulating tape which is extremely extensible so that its longitudinal margins can be stretched to extend radially outwards and over the edges of the end flanges of the bobbin. Core, bobbins and windings are designed so that, in the assembled transformer, there are spaces between the outer winding and the core. These spaces are filled with a semi-rigid curable insulating compound in order to prevent breakdown between the winding and the core of the transformer, which, in use, are at different potentials. There are also known solutions in which, around the stator winding, one or more insulating tapes (JP58-069670) are wound overlapped to one another, so as to avoid slots to occur in this covering of the stator winding. However, this solution, in order to promote an efficient insulation of the motor, uses a reel volume that is not filled with the conducting wire, with the consequent loss of motor efficiency described above. In another solution, around the coil windings is effected an over-injection, which acts in the fixation of the conducting wire in the reel and also provides the required electric insulation. However, the over-injection requires a distance of 2.4mm, demands a lot of material and reduces the filling space for the conducting wire, with the consequences aforementioned.

### Summary of the Invention

It is an object of the present invention to provide a process and an arrangement for electrically insulating a coil of an electric device of the type considered herein, which guarantees a minimum insulated distance between the conducting wires of said coil and an adjacent metallic part of the motor and which leads to a high filling factor in a reel in which said coil is wound, preferably corresponding to the maximum filling factor designed for the respective reel.

Another object of the present invention is to provide a process and an arrangement, such as mentioned above and which produce, in the electric device, an electric insulating physical barrier, defining a minimum insulated distance of 2.4mm, in any direction, between the coil winding and adjacent metallic or grounded parts of the motor.

A further object of the present invention is to provide a process and an electric insulating arrangement, as mentioned above and to be applied in an electric device, such as an electric motor stator of a refrigeration compressor, said electric insulation defining a minimum insulated distance of 2.4mm between the coil winding and an adjacent metallic or grounded part of the compressor and permitting a high filling factor of the conducting wire in the reel, preferably corresponding to the maximum filling factor provided for the reel.

Another further object of the present invention is to provide a process and an electric insulating arrangement, as mentioned above, which results in a stator that does not compromise the operation of the compressor and does not require modifying the dimensions existing in said compressor, particularly regarding maintaining free an outer face of the end flanges of the reel in linear motor stators.

Another object of the present invention is to provide a process and an electric insulating arrangement, as mentioned above, which leads to an electric insulation of reduced cost and easy automation.

These and other objects are attained through a process for electrically insulating a coil of an electric device of the type which comprises: a reel having a central hub carrying end flanges, a coil winding, and an outer lamination stack, said process comprising, before a step of mounting the lamination stack to the reel, the steps of: providing an electric insulating means comprising at least one insulating tape, self-adhesive on at least one face, said electric insulating means presenting two retention portions, each to be adhered and retained to one of the inner face and the outer face of a respective end flange of the reel, and a covering portion joined to said retention portions, to be adhered to the coil winding and dimensioned to cover the whole axial extension of the coil winding, in each of the two opposite regions of the latter, confronting with an adjacent portion of the lamination stack; adhering each of said retention portions of the electric insulating means to an end flange of the reel; adhering, subsequently to the formation of the coil winding, the covering portion of the electric insulating means on said axial extension of the coil winding.

The present invention also provides an arrangement for electrically insulating a coil of an electric device of the type defined above and which comprises an electric insulating means including at least one electric insulating tape, which is self-adhesive in at least one face, said electric insulating means presenting two retention portions, each adhered and retained to one of the inner face and outer face of a respective end flange; and a covering portion joined to said retention portions, to be adhered to the coil winding and dimensioned to cover the whole axial extension of the coil winding, in each of the two opposite regions of the latter, confronting with an adjacent lamination stack portion. With the present invention there is provided an electric insulating barrier of automated formation and which allows maximizing the conducting wire filling factor in the reel, and thus the electric motor efficiency for a given dimension of the reel.

Advantageous embodiments of the inventions are set out in the dependent claims.

### Brief Description of the Drawings

The invention will be described below, with reference to the enclosed drawings, in which:
Figure 1 schematically represents a perspective view of an electric device, such as a stator of a linear electric motor used in refrigeration compressors, partially illustrating the region of said stator including a lamination stack mounted to a reel of said stator filled with a determined conducting wire volume and surrounded, according to the prior art, with an insulating tape provided along the coil winding direction;
Figure 2 schematically represents a side view with a partial longitudinal cross section of a reel of an electric device, to which is applied a first electric insulating arrangement of the present invention, according to a first embodiment for the electric insulating means;
Figure 3 schematically represents a side view with a partial longitudinal cross section of the reel illustrated in figure 2, receiving a second electric insulating arrangement of the present invention, for the first embodiment of the electric insulating means;
Figure 4 schematically represents a side view with a partial longitudinal cross section of the reel illustrated in figure 2, receiving a third electric insulating arrangement of the present invention, for the first embodiment of the electric insulating means;
Figure 5 schematically represents a side view with a partial longitudinal cross section of the reel illustrated in figure 2, receiving a first electric insulating arrangement of the present invention, for a second embodiment of the electric insulating means;
Figure 6 schematically represents a side view with a partial longitudinal cross section of the reel illustrated in figure 2, receiving a second electric insulating arrangement of the present invention, for the second embodiment of the electric insulating means;
Figures 7 and 7a represent, schematically and respectively, a perspective view and a side view with a partial longitudinal cross section of the reel of the stator illustrated in figure 1, before receiving the winding of the conducting wire, illustrating an initial step of electrically insulating the stator, according to a third electric insulating arrangement of the present invention, for the second embodiment of electric insulating means;
Figures 8 and 8a represent, schematically and respectively, a perspective view and a side view with a partial longitudinal cross section of the reel illustrated in figures 7 and 7a, carrying a conducting wire winding, in a step of the electric insulating process of the present invention, subsequent to that illustrated in figures 7 and 7a;
Figures 9 and 9a represent, schematically and respectively, a perspective view and a side view with a partial longitudinal cross section of the reel illustrated in figures 8 and 8a, in another step of the electric insulating process of the present invention, subsequent to that illustrated in figures 8 and 8a;
Figures 10 and 11 represent, schematically and respectively, perspective views of the reel illustrated in figures 9 and 9a, in a last step of the electric insulating process of the present invention, showed in figures 9 and 9a, illustrating the different faces of said reel;
Figures 12 and 13 represent, schematically and respectively, a perspective view and a top view of the reel illustrated in figures 10 and 11, carrying the lamination stack of the stator; and
Figure 14 schematically represents a top view, such as that of figure 13, of the electric motor obtained with the electric insulating process of the present invention, mounted to an actuating element of a refrigeration compressor.

### Description of the Illustrated Constructions

The present invention will be described for an electric device comprising a reel 10, formed in an electric insulating material and presenting a tubular central hub 11, having a first and a second end, each incorporating a respective end flange 12, 13, said end flanges 12, 13 being parallel to one another and orthogonal to the axis of the central hub 11. The electric device also comprises a coil winding 20 and an outer lamination stack 30. In the formation of the electric device, the reel 10 receives and houses, around the central hub 11 and between its end flanges 12, 13, a conducting wire winding, or coil winding 20, generally in conducting wire (in copper, aluminum or other adequate material) and with a predetermined diameter, said winding (or coiling) being carried out until a certain filling degree of the reel 10 has been obtained.

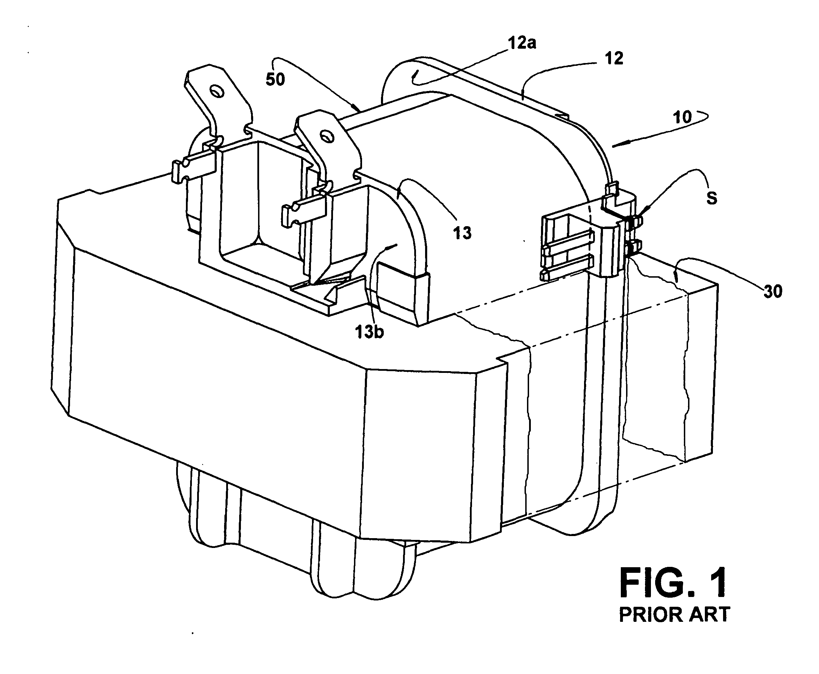

As can be observed in figure 1, the filling of the reel with the known processes does not allow filling the whole available volume of said reel, causing the losses already previously cited.

According to one aspect of the present invention, the electric device of the type described above receives an electric insulating arrangement comprising an electric insulating means 40 having at least one insulating tape 40a, which is self-adhesive in at least one face, said electric insulating means 40 presenting two retention portions 41, 42, each to be adhered and retained to one of the inner face 12a, 13a or outer face 12b, 13b, of a respective end flange 12, 13; and at least one covering portion 43 defined between said retention portions 41, 42, to be adhered to the coil winding 20 and dimensioned to cover the whole axial extension of the coil winding 20, in two opposite regions of the latter, confronting with an adjacent portion of lamination stack 30.

The electric insulating arrangement of the present invention is applied to the electric device through an electric insulating process of the present invention, which generically includes, before a step of mounting the lamination stack 30 to the reel 10, the steps of: providing the electric insulating means 40 of the type cited above, so that each retention portion 41, 42 is adhered and retained to one of the inner and outer faces 12a, 12b, 13a, 13b of one of the end flanges 12, 13, and that the covering portion is adhered to the coil winding 20 and dimensioned to cover the whole axial extension of the coil winding 20, in two opposite regions of the latter, confronting with an adjacent portion of the lamination stack 30; adhering each of said retention portions 41, 42 of the electric insulating means 40 to one of the end flanges 12, 13 of the reel 10; adhering, subsequently to the formation of the coil winding 20 in said reel 10, the covering portion 43 of the electric insulating means 40 on said axial extension of the coil winding 20 already introduced in the reel 10.

The electric insulation arrangement and process of the present invention are applicable to electric devices which present a lamination stack of the closed or open type, generally C- or E-shaped, which are used in the stator of a linear electric motor for a refrigeration compressor.

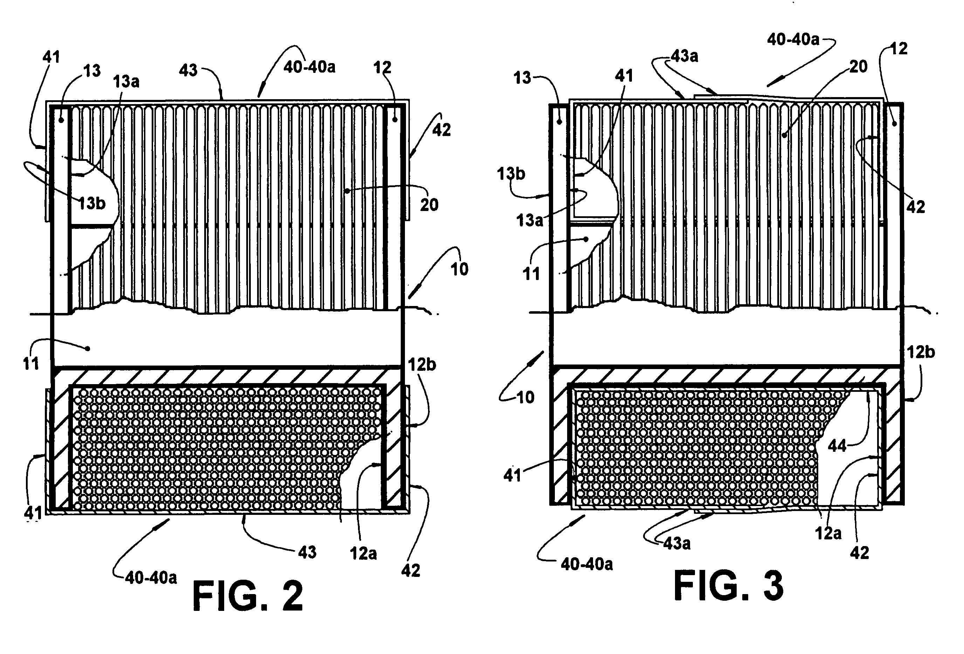

According to a way of carrying out the present invention, which is illustrated in figures 2-4, the electric insulating means 40 comprises a single electric insulating tape 40a, in which are defined, in a single piece, the two retention portions 41, 42 and the covering portion 43 of the electric insulating means 40. In this construction, the covering portion 43 is defined by a single extension of the electric insulating tape 40a extended between the two retention portions 41, 42, which are end portions. For this construction of electric insulating means 40, the electric insulation process of the present invention presents different processing sequences, as described below.

In a first way of carrying out the present electric insulating arrangement for the electric insulating means 40 in the form of a single electric insulating tape 40a, such as illustrated in figure 2, the electric insulating process of the present invention comprises the following sequence of steps: providing the coil winding 20 in the central hub 11 of the reel 10, until obtaining a desired filling of the reel which, in this construction, corresponds to the maximum filling of said reel. The expression "maximum filling" means the filling in which the coil winding defines a peripheral side surface coincident with the axial alignment between the peripheral edges of the two end flanges 12, 13 of the reel 10.

Subsequently to the formation of the coil winding 20 in the reel 10, the present process comprises a step of seating the covering portion 43 of the electric insulating tape 40a on the coil winding 20 and, afterwards, a step of adhering each retention portion 41, 42, sequentially or simultaneously, against an outer face 12b, 13b of each of the end flanges 12, 13 of the reel 10.

This processing sequence is preferable in the cases in which an electric insulating tape also presents its covering portion 43 provided with adhesive in its face to be seated on the coil winding 20.

For this way of carrying out the present electric insulating arrangement, after the step of forming the coil winding 20 of the reel 10, it is also possible to provide the following sequence of steps: adhering a retention portion 41 of the electric insulating tape 40a to an outer face 12b, 13b of one of the end flanges 12, 13 of the reel 10; seating the covering portion 43 on the coil winding 20 and adhering the other retention portion 42 to the outer face 12b, 13b of the other end flange 12, 13. This processing sequence is preferable in the cases in which the electric insulating tape does not present the covering portion 43 provided with adhesive, and the previous fixation of one of the retention portions to one of the end flanges 12, 13 of the reel 10 allows submitting the electric insulating tape to a desired tension for positioning this tape on the reel 10.

For this constructive form of electric insulating arrangement, with an electric insulating means presenting a single insulating tape, there is obtained a high filling factor of the reel, which has its outermost layer defining a peripheral side surface that may be coincident with the peripheral side contour of the reel, defined by the axial projection of the peripheral edge of the end flanges 12, 13, providing a maximum filling of the reel 10.

It should be observed that, although this first insulating arrangement defines a high filling factor, it can only be applied to electric devices which allow the presence of an electric insulating tape externally to the end flanges of the reel.

In a second way of carrying out the present electric insulating arrangement, with the electric insulating means 40 including a single electric insulating tape 40a, as illustrated in figure 3, the electric insulating process of the present invention comprises the following sequence of steps: a) adhering each retention portion 41, 42 against an inner face 12a, 13a of a respective end flange 12, 13 of the reel 10; b) providing the coil winding 20 in the central hub 11, until obtaining a desired filling of the reel 10; and c) seating the covering portion 43 of the electric insulating tape 40a on the coil winding 20.

This second electric insulating arrangement presents two possible constructions for the covering portion 43. In one of them, said covering portion 43 is integrally extended from one of the retention portions 41, 42 and, in the other of said constructions, the covering portion 43 is defined by two end covering extensions 43a, each extended from a respective retention portion 41, 42. This constructive variant is illustrated in figure 3.

For the present electric insulating arrangement, the retention portions 41, 42 are joined to one another by a base retention portion 44, to be seated against the central hub 11 of the reel 10.

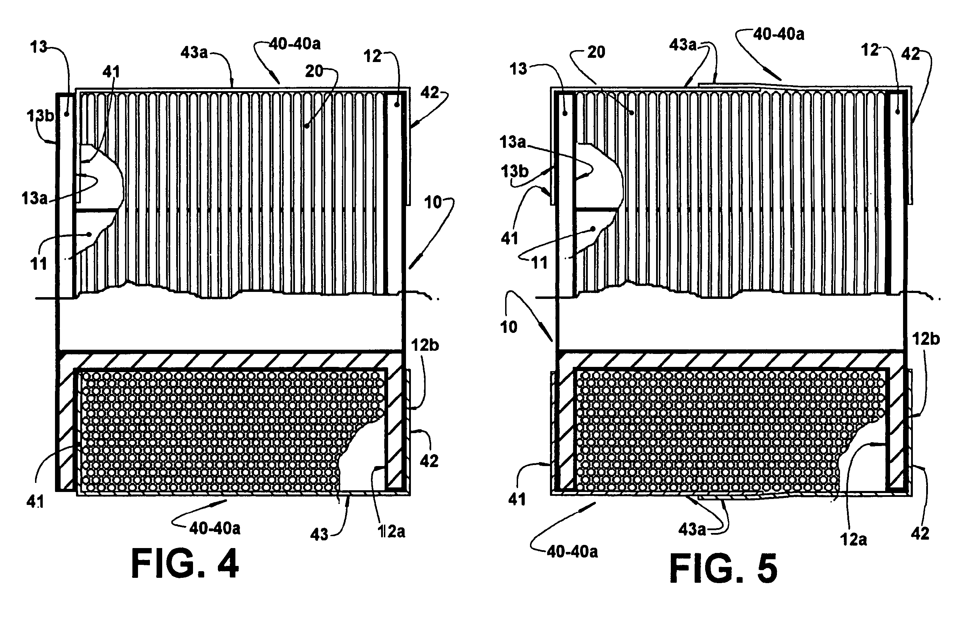

For these constructions of electric insulating means, the process of electric insulation also includes some additional intermediary steps besides those already presented and which aim at maintaining the covering portion 43, either as a single piece or defined by the two end covering extensions 43a, affixed to the reel until their deposition on the coil winding. In this process, after the step of adhering each retention portion 41, 42 to an inner face of a respective end flange 12, 13, the covering portion 43, either as a single piece or defined by the end covering extensions 43a, is also retained against an adjacent outer face 12b, 13b of the end flange 12, 13, in whose inner face 12a, 13a is adhered a respective retention portion 41, 42 of the electric insulating tape 40a (figures 3 and 4). After the filling of the reel with the coil winding, the present process includes the steps of: releasing the covering portion 43 from an outer face 12b, 13b of one of the end flanges 12, 13 (or, in the case of the construction with end covering extensions 43a, releasing the end covering extension 43a from the respective outer face 12b, 13b of said end flange 12, 13 of the reel 10); and conducting the covering portion 43 or the end covering extension 43a to an angular displacement around the corresponding retention portion 41, 42 adhered to an adjacent end flange 12, 13 of the reel 10, until obtaining the seating of the covering portion 43 or of the end covering extensions 43a on the coil winding 20. In the case of the construction presenting end covering extensions 43a, these are arranged on the coil winding 20, so that the outermost end covering extension 43a has part of its extension overlapping the part of the other end covering extension 43a already seated on the coil winding 20.

In these constructions, the covering portion 43 or the end covering extensions 43a may be self-adhesive along the whole respective extension, on each face of the electric insulating tape 40a.

For this second constructive form of electric insulating arrangement, with an electric insulating means 40 presenting a single electric insulating tape 40a, in spite of not obtaining the same reel filling factor of the constructive form previously described, said filling is still superior to that obtained with the electric insulating arrangement known from the prior art. Although this constructive form does not present a maximum reel filling, the disposition of the electric insulating tape seated on the reel 10, between the end flanges 12, 13, allows said electric insulating arrangement to be applied to electric devices which do not permit the presence of the electric insulating tape 40a externally to the end flanges 12, 13 of the reel 10, as it occurs in linear electric motors.

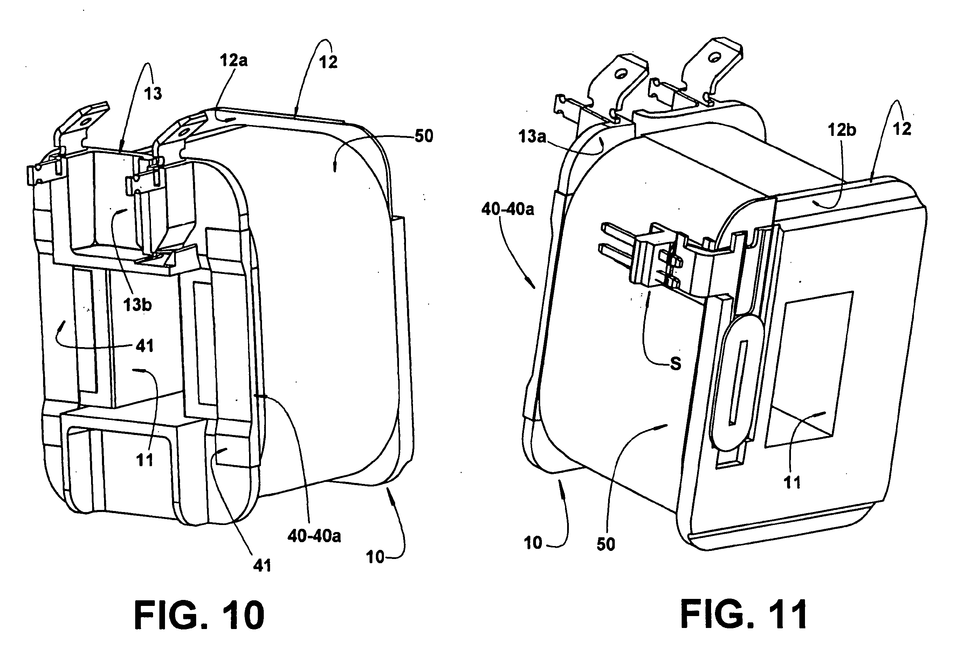

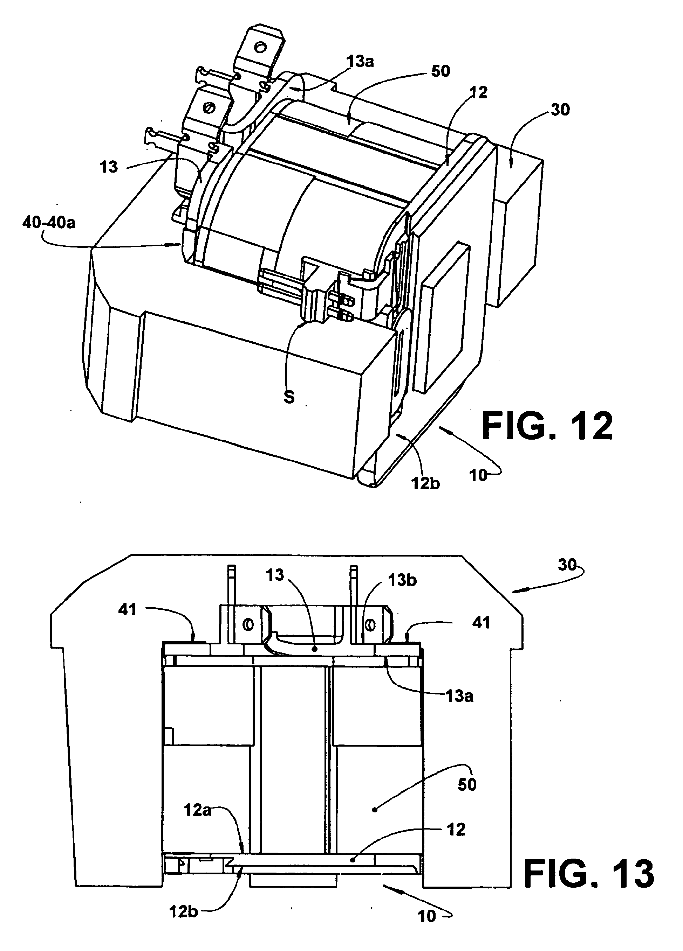

According to another way of carrying out the present invention, which is illustrated in figures 5-14, the electric insulating means 40 of the electric insulating arrangement comprises two electric insulating tapes 40a, each presenting one of the retention portions 41, 42 and one end covering extension 43a of the electric insulating means 40. For this construction of electric insulating means 40, the electric insulating process of the present invention presents different processing sequences, as described below.

In a first way of carrying out the present electric insulating arrangement for the electric insulating means 40 in the form of two electric insulating tapes 40a, as illustrated in figure 5, the electric insulating process of the present invention comprises the following sequence of steps: providing the coil winding 20 in the central hub 11 of the reel 10, until obtaining a desired filling of the reel 10; seating the end covering extension 43a of each electric insulating tape 40a on the coil winding 20, so that said end covering extensions 43a are overlapped on said axial extension of the coil winding 20, at least in the region adjacent to an end edge of each said end covering extension 43a; and adhering the retention portion 41, 42 of each electric insulating tape 40a against an outer face 12b, 13b of an adjacent respective end flange 12, 13 of the reel.

For this way of carrying out the present electric insulating arrangement, after the step of providing the coil winding 20 on the reel 10, it is further possible to provide the electric insulating steps in the following sequence: adhering the retention portion 41, 42 of each electric insulating tape 40a against an outer face 12b, 13b of an adjacent respective end flange 12, 13 of the reel 10; seating the end covering extension 43a of each electric insulating tape 40a on the coil winding 20, so that said end covering extensions 43a are overlapped on said axial extension of the coil winding 20, as previously described.

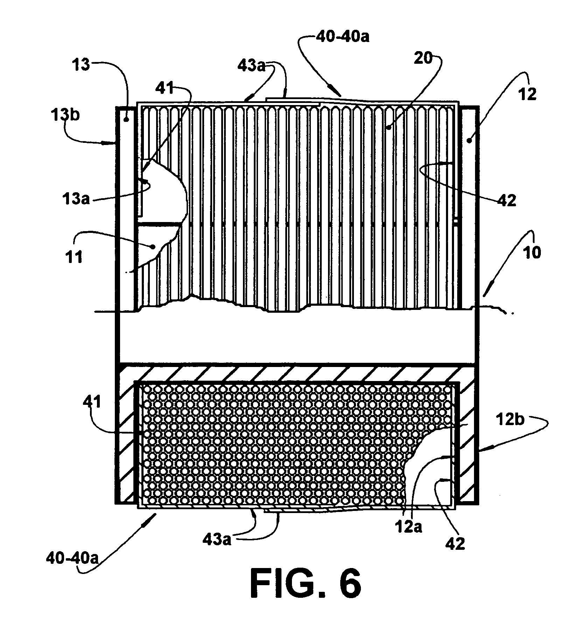

In a second way of carrying out the present electric insulating arrangement with the electric insulating means 40 including two electric insulating tapes 40a, such as illustrated in figure 6, the electric insulating process of the present invention comprises the following sequence of steps: adhering the retention portion 41, 42 of each electric insulating tape 40a against an inner face 12a, 13a of a respective end flange 12, 13 of the reel 10; providing the coil winding 20 in the central hub 11, until obtaining a desired filling of the reel 10; and seating the end covering extension 43a of each electric insulating tape 40a on the coil winding 20, so that said end covering extensions 43a are overlapped on said axial extension of the coil winding 20, as described above.

For this constructive form of electric insulating means 40, the electric insulating process further includes some additional intermediary steps besides those already presented and which aim at maintaining the end covering extensions 43a affixed to the reel 10 until their deposition on the coil winding 20. In this process, after the step of adhering each retention portion 41, 42 to an inner face of a respective end flange 12, 13, each of the end covering extensions 43a is seated and retained against an adjacent outer face 12b, 13b of the end flange 12, 13, in whose inner face 12a, 13a is adhered a respective retention portion 41, 42 of the electric insulating tape 40a (figure 6). After the filling of the reel 10 with the coil winding 20, the present process includes the steps of: releasing the end covering extension 43a of each electric insulating tape 40a from the outer face 12b, 13b of the end flange 12, 13, in which said end covering extension 43a is retained; conducting each end covering extension 43a to an angular displacement around the corresponding retention portion 41, 42, which is adhered to a respective end flange 12, 13, until seating each of said end covering extensions 43a on the coil winding 20, in order to obtain the overlap of said end covering extensions 43a, as already described.

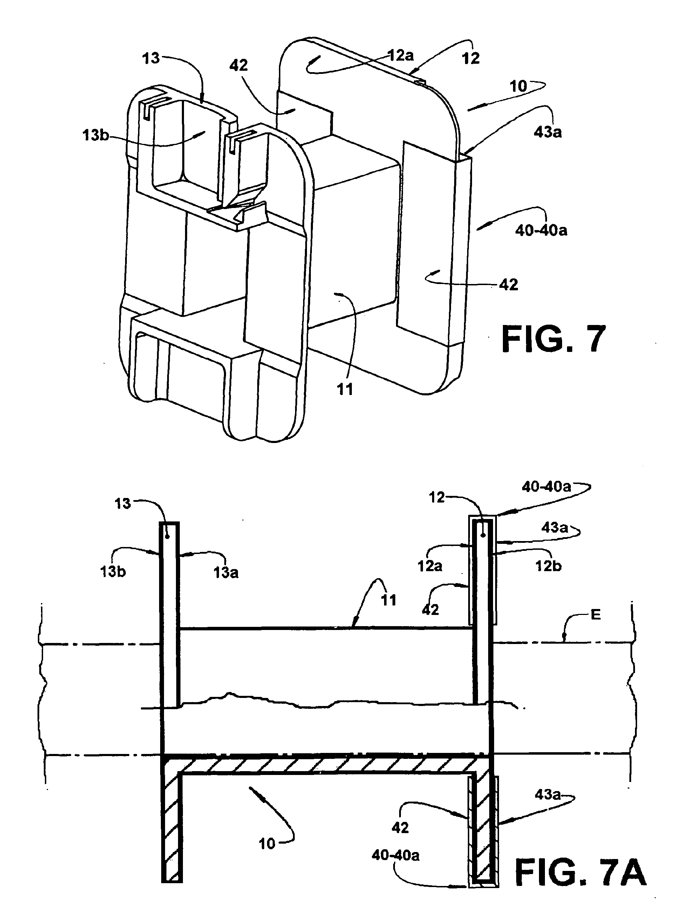

According to another way of carrying out the present invention, for the construction of electric insulating means 40 comprising two electric insulating tapes 40a, such as illustrated in figures 7-14, the electric insulating process comprises the following sequence of steps: adhering the retention portion 41, 42 of an electric insulating tape 40a against an inner face 12a, 13a of a respective end flange 12, 13 of the reel 10; providing the coil winding 20 in the central hub 11 of the reel 10, until obtaining a desired filling of the reel 10; and seating the end covering extension 43a of said electric insulating tape 40a on the coil winding 20; adhering the retention portion 41, 42 of another electric insulating tape 40a against the outer face 12b, 13b of the other end flange 12, 13 of the reel 10; and seating the end covering extension 43a of the other electric insulating tape 40a on the coil winding 20, in the axial extension of the coil winding 20, so that this end covering extension 43a is overlapped on the end covering extension 43a of the electric insulating tape 40a, which is adhered to the end flange 12, 13 of the reel 10, as previously described. For this constructive form of electric insulating means 40, the electric insulating process further includes some additional intermediary steps besides those already presented and which aim at maintaining one of the end covering extensions 43a affixed to the reel 10, until their deposition on the coil winding 20. In this process, after the step of adhering the retention portion 41, 42 of an electric insulating tape 40a to an inner face 12a, 13a of a respective end flange 12, 13 of the reel 10, the respective end covering extension 43a is seated and retained against an adjacent outer face 12b, 13b of the end flange 12, 13, in whose inner face 12a, 13a is adhered a respective retention portion 41, 42 of the electric insulating tape 40a (figures 7-14). After the filling of the reel 10 with the coil winding 20, the present process comprises the intermediary steps of releasing the end covering extension 43a of the electric insulating tape 40a from the outer face 12b, 13b of the end flange 12, 13; conducting the end covering extension 43a of the electric insulating tape 40a to an angular displacement around the corresponding retention portion 41, 42 adhered to an end flange 12, 13, until seating said end covering extension 43a on the coil winding 20.

For this constructive form of electric insulating arrangement with an electric insulating means 40 presenting two electric insulating tapes 40a, in spite of not obtaining a maximum filling factor of the reel 10, such as described for other constructive forms presented herein, the disposition of the electric insulating tapes 40a allow said electric insulating arrangement to be applied to electric devices which do not permit the presence of electric insulating tape 40a externally to at least one of the end flanges 12, 13 of the reel 10.

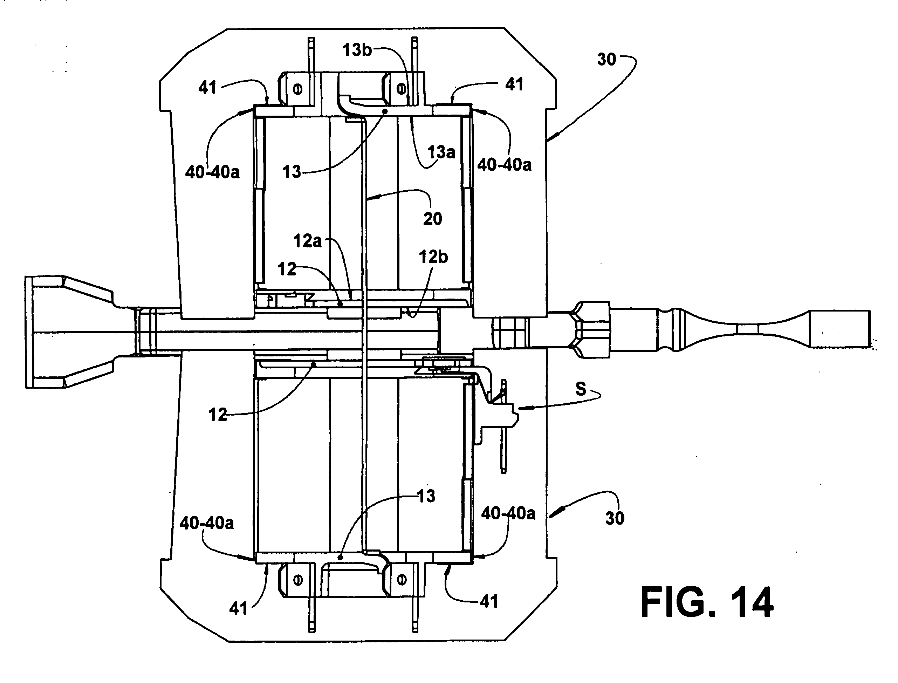

This arrangement is particularly applied to mounting the stator of a linear electric motor of the type used in refrigeration compressors and in which, close to an outer face of the reel 10, is effected the displacement of the magnets of said electric motor, as illustrated in figure 14.

For application to an electric motor stator, each of at least two first electric insulating tapes 40a, which are disposed in the region in which is provided an E-shaped lamination stack, as illustrated in figures 1 and 12-14, has its retention portion 41 seated and adhered against an inner face 12a of an end flange 12 of the reel 10 and the respective end covering extension 43a seated and retained, by adhesive provided in said end covering extensions 43a, against an outer face 12b of the adjacent end flange 12, as aforedescribed. In this construction, each first electric insulating tape 40a is dimensioned so that the respective retention portion 41 has its free edge, which is opposite to that to be connected to the respective end covering extension 43a, disposed adjacently to or radially spaced from the central hub 11 of the reel 10, preventing wrinkling of the tape in this region, which could hamper the automatic winding of the coil in the reel 10.

In order to prevent the end covering extension 43a, while seated against the outer face 12b of the end flange 12 of the reel 10, from reaching a through hole of the central hub 11 of the reel 10, which could be harmful to the operations of winding and electrically insulating said reel 10, said end covering extension 43a is dimensioned so that a respective free edge is at maximum coplanar to a plane containing an adjacent edge of the through hole of the central hub 11.

With the seating and adhesion of the retention portion 41 and of the end covering extension 43a of each first electric insulating tape 40a to the reel 10, the coil winding is formed therearound, until the desired filling, which is calculated as a function of the efficiency requirements for the electric motor. As described above, the electric insulating arrangement of the present invention allows a maximum filling, until the free end edges of the end flanges 12, 13 of the reel 10.

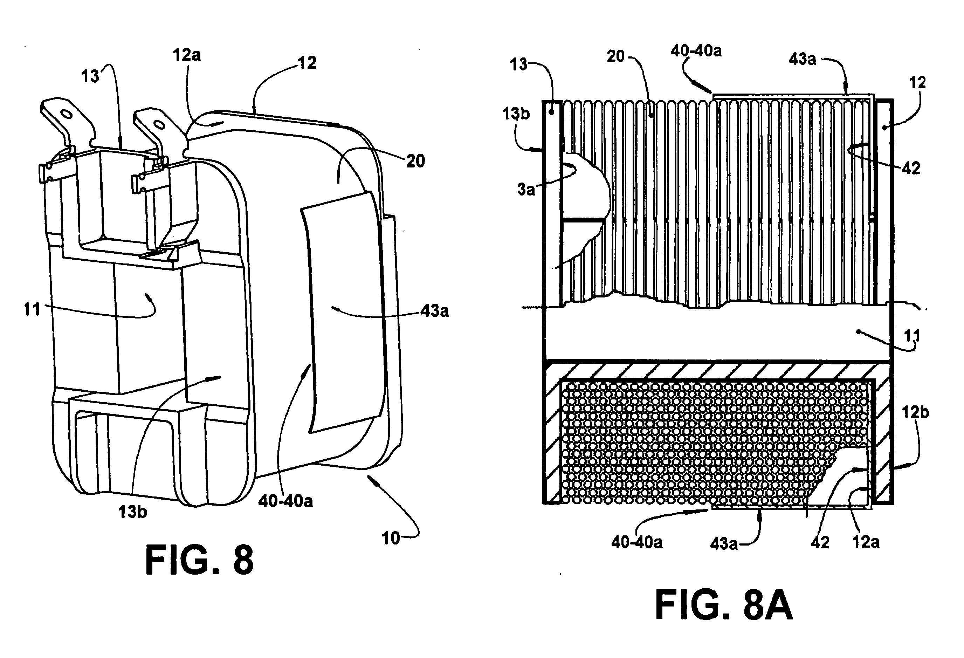

With the coil winding 20, the conducting wire volume guarantees maintaining the positioning of the first insulating tapes, since said conducting wires are seated against the inner face 12a, 13a of each end flange 12, 13 (figures 8 and 8a). After the winding, the end covering extension 43a of each electric insulating tape 40a is released from its seating and retention condition in relation to an adjacent outer face 12b of the end flange 12, and conducted to an angular displacement until its face, which is opposite to that previously adhered to said outer face 12b of the end flange 12, is seated and retained against an adjacent portion of the coil winding 20 (figures 8 and 8a). The end flange 12 that receives this first electric insulating tape 40a is that which must maintain free the outer face 12b of the end flange 12, due to the operational requirements of the compressor. This end flange 12 is conformed to be mounted, in the linear electric motor, close to a movable part of the linear electric motor. In the refrigeration compressor construction, this end flange 12 is mounted close to a piston displacing means (not illustrated) of the refrigeration compressor and to the magnet elements (or magnets) of the linear electric motor (figure 14). In this mounting arrangement, end portions of the lamination stack 30 define a plane spaced back from or, at maximum, coplanar to a plane containing an outermost portion of the outer face 12b of the end flange 12 of the reel 10. Upon mounting the sensors S in the reel 10, said sensors are positioned in said end flange 12, so that their mounting structure is spaced back from the plane containing the outermost portion of the outer face 12b of the end flange 12, as illustrated in drawings 12-14.

The placement of the first electric insulating tape is carried out so that this presents a U-shaped form around the free edge of said end flange 12 of the reel 10. This placement is carried out in U-shape to allow accessing the conducting wire winding of the reel 10, without hampering said winding.

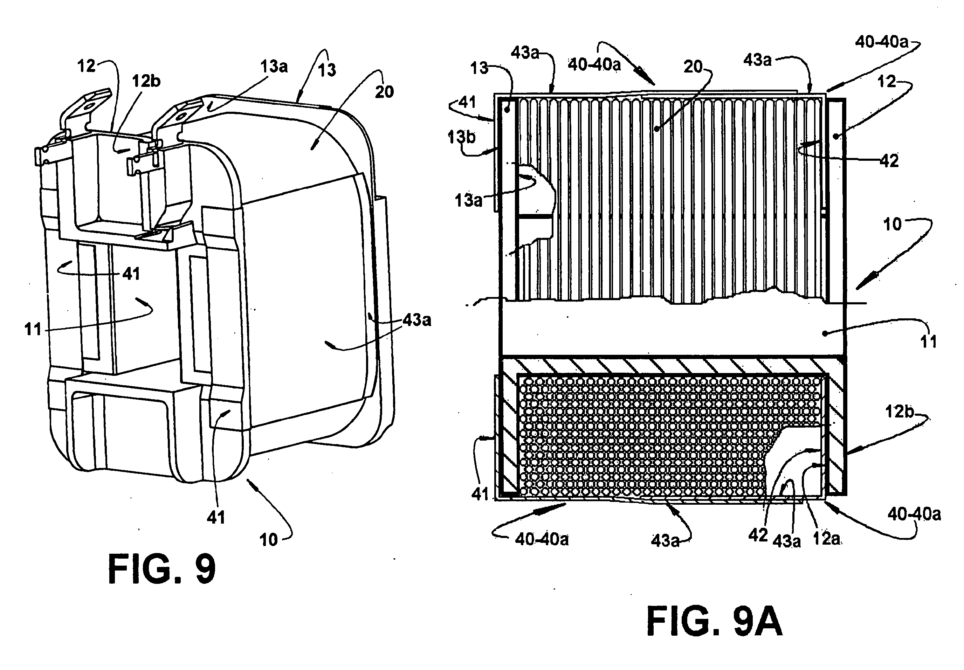

After seating the end covering extension 43a of each first electric insulating tape 40a to the coil winding 20, the arrangement of the present invention provides the seating and retention of a second electric insulating tape 40a on both the coil winding 20 and the outer face 13b of the other end flange 13, as illustrated in figures 9 and 9a. The second electric insulating tape 40a is dimensioned so that the respective retention portion 41 does not interfere with the mounting, in the end flange 13 in which it is retained, of sensors S of the electric motor of known use.

In this case, the end covering extension 43a may have a dimensioning larger than that of the end covering extension 43a of the first electric insulating tape 40a, being seated on part of the coil winding 20, adjacent to the end flange 13 in which is retained the second electric insulating tape 40a, and on a substantial part of the end covering extension 43a of the first electric insulating tape 40a.

It should be observed that, in the case of linear motor stators, the excess of insulating tape externally to one of the end flanges 12, 13 of the reel 10 hampers the injection or winding of the coil 20 in the reel 10 and, on the other side, it makes difficult the disposition of the position sensor that is mounted in said reel 10, as illustrated.

Furthermore, an excess of insulating tape or even a disposition of insulating tape presenting part of its extension on the outer face 12b, 13b of the end flange 12, 13 to be mounted adjacent to the displacing means of the compressor, can release end portions, which can collide with the displacing means. Said end flange is mounted with minimum gaps to a linear electric motor. Since in these linear motors the magnets and the displacing means are too close to the end flange of the reel, the constructions of electric insulating arrangement presenting a retention portion 41 of the electric insulating means 40 adhered to the outer face of said end flange are not feasible. In these cases, the desired electric insulation should be obtained with the placement, in this side of the reel 10, of the first electric insulating tape 40a.

With the disposition of the first and second electric insulating tape 40a in the mounting region of the lamination stack 30, there are no slots without electric insulation which would permit electric current leakage.

For any of the constructions above, the present invention further provides the disposition of an additional electric insulating tape 50 to be seated on the coil winding 20, in the direction of said winding, having part of its extension adhered on the covering portion 43 (or on end covering extensions 43a) of the electric insulating means 40, in said axial extension of the coil winding 20. This tape provides insulation of the whole remainder of the coil winding 20, as well as a finishing to the latter. This additional electric insulating tape 50 has the purpose of retaining, with more precision, all the other electric insulating tapes of the electric insulating means 40.

In a constructive form of the present invention, all the electric insulating tapes are self-adhesive, made of the same material and with the same constructive characteristics. However, these characteristics may be different, as well as their constitutive material, as a function of the dimensional requirements of the reel.

In a way of carrying out the present invention, the electric insulating tapes are made of polyester material, with a maximal thickness of 50 microns and, in the case of use in refrigeration compressor stators, also presenting other proper specifications.

The thickness of the electric insulating tapes 40a of the electric insulating means 40, and also of the winding of the additional electric insulating tape 50, is calculated as a function of the spaces available in the reel 10, besides guaranteeing the spacings required by the existing safety rules.

With the placement of the lamination stack 30 around the reel 10 carrying the coil winding 20 and electric insulating means 40 as described herein, an inner face of part of said lamination stack 30 is seated against an outer face of the retention portion 41 of each second electric insulating tape 40a, pressing the latter against the end flange 13.

The present invention allows obtaining a stator with a high filling factor of conducting wire in the reel 10, being also advantageous the construction presenting the first and the second electric insulating tapes 40a of the electric insulating means 40, as described above, mainly in the cases in which, as required by project of the motor and by necessity of a full filling of the reel 10, it is very difficult to maintain the electric insulation distance only with air, complying with the rules. The invention is particularly advantageous for the stator constructions in which the insulating tape is highly advisable for obtaining motor efficiency.

## Claims

1. A process for electrically insulating a coil of an electric device of the type which comprises: a reel (10) having a central hub (11) carrying end flanges (12, 13); a coil winding (20); and an external lamination stack (30), **characterized in that** it comprises, before a step of mounting the lamination stack (30) to the reel (10), the steps of:
- providing an electric insulating means (40) comprising at least one electric insulating tape (40a), which is self-adhesive on at least one face, said electric insulating means (40) presenting two retention portions (41, 42), each to be adhered and retained to one of the inner face (12a, 13a) and outer face (12b, 13b) of a respective end flange (12, 13) of the reel (10); and a covering portion (43) joined to said retention portions (41, 42), to be adhered to the coil winding (20) and dimensioned to cover the whole axial extension of the coil winding (20), in each of the two opposite regions of the latter, confronting with an adjacent portion of the lamination stack (30);
- adhering each of said retention portions (41, 42) of the electric insulating means (40) to an end flange (12, 13) of the reel (10); and
- adhering, subsequently to the formation of the coil winding (20), the covering portion (43) of the electric insulating means (40) to said axial extension of the coil winding (20).

2. The process, as set forth in claim 1, **characterized in that** it comprises the sequence of steps of:
a- providing the coil winding (20) in the central hub (11), until obtaining a desired filling of the reel (10);
b- seating the covering portion (43) of a single electric insulating tape (40a) on the coil winding (20); and
c- adhering each retention portion (41, 42) of a single electric insulating tape (40a) against an outer face (12b, 13b) of a respective end flange (12, 13) of the reel (10).

3. The process, as set forth in claim 1, **characterized in that** it comprises the sequence of steps of:
a- adhering each retention portion (41, 42) against an inner face (12a, 13a) of a respective end flange (12, 13) of the reel (10);
b- providing the coil winding (20) in the central hub (11), until obtaining a desired filling of the reel (10); and
c- seating the covering portion (43) of a single electric insulating tape (40a) on the coil winding (20).

4. The process, as set forth in claim 3, **characterized in that** the retention portions (41, 42) are joined to one another by a base retention portion (44), to be seated against the central hub (11) of the reel (10) and the covering portion (43) is defined by two end covering extensions (43a) of each of the two retention portions (41, 42), said process including, after the step "a", the additional intermediary steps:
a1- retaining the end covering extension (43a) of each covering portion (43) of the electric insulating tape (40a) against an outer face (12b, 13b) of the end flange (12, 13), in whose inner face (12a, 13a) is adhered a respective retention portion (41, 42) of the single electric insulating tape (40a);
b1- releasing the end covering extension (43a) of each covering portion (43) of the electric insulating tape (40a) from the outer face (12b, 13b) of said end flange (12, 13) of the reel (10);
b2- conducting the end covering extension (43a) of each covering portion (43) to an angular displacement around the corresponding retention portion (41, 42) adhered to the end flange (12, 13) of the reel (10).

5. The process, as set forth in claim 1, **characterized in that** the electric insulating means (40) comprises two electric insulating tapes (40a), each presenting
one of the retention portions (41, 42) and an end covering extension (43a) of the electric insulating means (40), the process comprising the sequence of steps:
a- providing the coil winding (20) in the central hub (11), until obtaining a desired filling of the reel (10) ;
b- seating the end covering extension (43a) of each electric insulating tape (40a) on the coil winding (20), so that said end covering extensions (43a) are overlapped on said axial extension of the coil winding (20); and
c- adhering the retention portion (41, 42) of each electric insulating tape (40a) against an outer face (12b, 13b) of an adjacent and respective end flange (12, 13) of the reel (10).

6. The process, as set forth in claim 3, **characterized in that** it includes, after the step "a", the additional intermediary steps:
a1- seating and retaining the end covering extension (43a) of each electric insulating tape (40a) against an outer face (12b, 13b) of the end flange (12, 13), in whose inner face (12a, 13a) is adhered the retention portion (41, 42) of the respective electric insulating tape (40a);
b1- releasing the end covering extension (43a) of each electric insulating tape (40a) from the outer face (12b, 13b) of the respective end flange (12, 13) of the reel (10);
b2- conducting the end covering extension (43a) to an angular displacement around the corresponding retention portion (41, 42) adhered to the end flange (12, 13), until the seating of each of said end covering extensions (43a) on the coil winding (20).

7. An arrangement for electrically insulating a coil of an electric device of the type which comprises: a reel (10) having a central hub (11) carrying end flanges (12, 13); a coil winding (20); and an outer lamination stack (30), **characterized in that** it comprises an electric insulating means (40) including at least one electric insulating tape (40a), self-adhesive in at least one face, said electric insulating means (40) presenting two retention portions (41, 42), each adhered and retained to one of the inner face (12a, 13a) and outer face (12b, 13b) of a respective end flange (12, 13); and a covering portion (43) joined to said retention portions (41, 42), to be adhered to the coil winding (20), and dimensioned to cover the whole axial extension of the coil winding (20), in each of the two opposite regions of the latter, confronting with an adjacent portion of the lamination stack (30).

8. The arrangement, as set forth in claim 7, **characterized in that** the coil winding (20) in the central hub (11) defines a surface substantially coincident with a peripheral side surface of the reel (10), defined including a free end edge of each end flange (12, 13) of said reel (10).

9. The arrangement, as set forth in claim 7, **characterized in that** the electric insulating means (40) comprises a single electric insulating tape (40a) presenting, in a single piece, the two retention portions (41, 42) and the covering portion (43).

10. The arrangement, as set forth in claim 9, **characterized in that** the covering portion (43) is defined by a single extension of an electric insulating tape (40a) extended between the two retention portions (41, 42).

11. The arrangement, as set forth in claim 10, **characterized in that** the retention portions (41, 42) are joined to one another by a base retention portion (44), to be seated against the central hub (11) of the reel (10), the electric insulating means (40) being defined by two end covering extensions (43a), each extended from one of the two retention portions (41, 42).

12. The arrangement, as set forth in claim 7, **characterized in that** the electric insulating means (40) comprises two electric insulating tapes (40a), each presenting one of the retention portions (41, 42) and an end covering extension (43a) of the electric insulating means (40).

13. The arrangement, as set forth in claim 12, **characterized in that** each electric insulating tape (40a) has the respective retention portion (41, 42) adhered against an outer face (12b, 13b) of an end flange (12, 13) of the reel (10).

14. The arrangement, as set forth in claim 12, **characterized in that** one of the electric insulating tapes (40a) has its retention portion (41, 42) adhered to an inner face of one of the end flanges (12, 13) of the reel (10), the retention portion (41, 42) of the other electric insulating tape (40a) being adhered to the outer face (12b, 13b) of the other end flange (12, 13) of the reel (10).

15. The arrangement, as set forth in any one of claims 7-14, **characterized in that** it further comprises an additional electric insulating tape (50), to be seated on the coil winding (20), in the direction of said winding, having part of its extension adhered on the covering portion (43) of the electric insulating means (40) in said axial extension of the coil winding (20).

## Patentansprüche

1. Verfahren zum elektrischen Isolieren einer Spule eines elektrischen Gerätes der Art mit einer Trommel 10), die einen zentralen Wickelkern (11) aufweist, der Endflansche (12, 13) trägt, einer Spulenwicklung (20) und mit einem äußeren Blechpaket (30), **dadurch gekennzeichnet, daß** es, vor einem Schritt des Montierens des Blechpaketes (30) an der Trommel (10), die folgenden Schritte umfaßt:
- Vorsehen von elektrischen Isoliermitteln (40), die zumindest ein elektrisches Isolationsband (40a) umfassen, das selbstklebend auf zumindest einer Fläche ausgebildet ist, wobei die elektrischen Isoliermittel (40) zwei Halteabschnitte (41, 42) aufweisen, jeder zum Ankleben und zum Halten an einer der inneren Fläche (12a, 13a) und der äußeren Fläche (12b, 13b) eines entsprechenden Endflansches (12, 13) der Trommel (10), und eines Abdeckabschnitts (43), der mit den Halteabschnitten (41, 42) verbunden ist, zur Befestigung an der Spulenwicklung (20) und zur Bemessung so, daß er die gesamte axiale Erstreckung der Spulenwicklung (20) bedeckt, in jedem der beiden einander gegenüberliegenden Bereichen der letzteren, und einem benachbarten Abschnitt des Blechpaketes (30) gegenübersteht;
- Ankleben jedes dieser Halteabschnitte (41, 42) der elektrischen Isoliermittel (40) an einem Endflansch (12, 13) der Trommel (10), und
- anschließend an die Bildung der Spulenwicklung (20) Ankleben des Abdeckabschnitts (43) der elektrischen Isoliermittel (40) an der axialen Erstreckung der Spulenwicklung (20).

2. Verfahren nach Anspruch 1, **dadurch gekennzeichnet, daß** es die Abfolge der folgenden Schritte umfaßt:
a - Vorsehen der Spulenwicklung (20) am zentralen Wickelkern (11), bis eine gewünschte Füllung der Trommel (10) erreicht ist;
b - Aufsetzen des Abdeckabschnitts (43) eines einzelnen elektrischen Isolierbandes (40a) auf die Spulenwicklung (20), und
c - Ankleben jedes Halteabschnitts (41, 42) eines einzelnen elektrischen Isolierbandes (40a) auf einer Außenfläche (12b, 13b) eines entsprechenden Endflansches (12, 13) der Trommel (10).

3. Verfahren nach Anspruch 1, **dadurch gekennzeichnet, daß** es die Abfolge der folgenden Schritte umfaßt:
a - Ankleben jedes Halteabschnitts (41, 42) an eine Innenfläche (12a, 13a) eines entsprechenden Endflansches (12, 13) der Trommel (10);
b- Vorsehen der Spulenwicklung (20) am zentralen Wickelkern (11) bis zum Erhalt einer gewünschten Füllung der Trommel (10), und
c - Aufsetzen des Abdeckabschnitts (43) eines einzelnen elektrischen Isolierbandes (40a) auf die Spulenwicklung (20).

4. Verfahren nach Anspruch 3, **dadurch gekennzeichnet, daß** die Halteabschnitte (41, 42) aneinander befestigt sind durch einen Basishalteabschnitt (44) zum Aufsetzen auf dem zentralen Wickelkern (11) der Trommel (10), und der Abdeckabschnitt (43) durch zwei Abdeck-Endansätze (43a) jedes der zwei Halteabschnitte (41, 42) festgelegt wird, wobei das Verfahren, nach dem Schritt "a", folgende zusätzliche Zwischenschritte umfaßt:
a1 - Halten des Abdeck-Endansatzes (43a) jedes Abdeckabschnitts (43) des elektrischen Isolierbandes (40a) an einer Außenfläche (12b, 13b) des Endflansches (12, 13), an dessen Innenfläche (12a, 13a) ein entsprechender Halteabschnitt (41, 42) des einzelnen elektrischen Isolierbandes (40a) angeklebt ist;
b1 - Freigeben des Abdeck-Endansatzes (43a) jedes Abdeckabschnitts (43) des elektrischen Isolierbandes (40a) von der Außenfläche (12b, 13b) des Endflansches (12, 13) der Trommel (10);
b2 - Durchführung eines Winkelversatzes des Abdeck-Endansatzes (43a) jedes Abdeckabschnitts (43) um den entsprechenden Halteabschnitt (41, 42), der an den Endflansch (12, 13) der Trommel (10) angeklebt ist.

5. Verfahren nach Anspruch 1, **dadurch gekennzeichnet, daß** die elektrischen Isoliermittel (40) zwei elektrische Isolationsbänder (40a) umfassen, deren jedes einen der Halteabschnitte (41, 42) und einen Abdeck-Endansatz (43a) der elektrischen Isoliermittel (40) bildet, wobei das Verfahren die Abfolge der folgenden Schritte umfaßt:
a - Vorsehen der Spulenwicklung (20) am zentralen Wickelkern (11) bis zum Erhalt einer gewünschten Füllung der Trommel (10);
b - Auflegen des Abdeck-Endansatzes (43a) jedes elektrischen Isolierbandes (40a) auf die Spulenwicklung (20) derart, daß diese Abdeck-Endansätze (43a) sich auf der axialen Erstreckung der Spulenwicklung (20) überlappen, und
c- Ankleben des Halteabschnitts (41, 42) jedes elektrischen Isolierbandes (40a) an einer Außenfläche (12b, 13b) eines benachbarten und entsprechenden Endflansches (12, 13) der Trommel (10).

6. Verfahren nach Anspruch 3, **dadurch gekennzeichnet, daß** es, nach dem Schritt "a", die folgenden zusätzlichen Zwischenschritte einschließt:
a1 - Auflegen und Festhalten des Abdeck-Endansatzes (43a) jedes elektrischen Isolierbandes (40a) auf einer Außenfläche (12b, 13b) des Endflansches (12, 13), an dessen innerer Fläche (12a, 13a) der Halteabschnitt (41, 42) des entsprechenden elektrischen Isolationsbandes (40a) angeklebt ist;
b1 - Lösen des Abdeck-Endansatzes (43a) jedes elektrischen Isolationsbandes (40a) von der Außenfläche (12b, 13b) des entsprechenden Endflansches 12, 13) der Trommel (10);
b2 - Durchführen eines Winkelversatzes des Abdeck-Endansatzes (43a) um den entsprechenden Halteabschnitt (41, 42), der an den Endflansch (12, 13) angeklebt ist, bis jeder der Abdeck-Endansätze (43a) auf der Spulenwicklung (20) sitzt.

7. Anordnung zum elektrischen Isolieren einer Spule eines elektrischen Gerätes der Art mit einer Trommel (10), die einen zentralen Wickelkern (11) aufweist, der Endflansche (12, 13) trägt, einer Spulenwicklung (20) und einem äußeren Blechpaket (30), **dadurch gekennzeichnet, daß** sie elektrische Isoliermittel (40) umfaßt, die wenigstens ein elektrisches Isolierband (40a) aufweisen, das auf wenigstens einer Seite selbstklebend ist, wobei die elektrischen Isoliermittel (40) zwei Halteabschnitte (41, 42), deren jeder an einer Innenfläche (12a, 13a) oder Außenfläche (12b, 13b) eines entsprechenden Endflansches (12, 13) angeklebt und gehalten ist, sowie einen Abdeckabschnitt (43) umfassen, der mit diesen Halteabschnitten (41, 42) verbunden ist, zum Ankleben an die Spulenwicklung (20), und so bemessen ist, daß er die gesamte axiale Erstreckung der Spulenwicklung (20) auf jeder der beiden einander gegenüberliegenden Bereiche der letzteren überdeckt, wobei er einem benachbarten Abschnitt des Blechpaketes (30) gegenübersteht.

8. Anordnung nach Anspruch 7, **dadurch gekennzeichnet, daß** die Spulenwicklung (20) im zentralen Wickelbereich (11) eine Oberfläche festlegt, die im wesentlichen mit einer umlaufenden Seitenfläche der Trommel (10) zusammenfällt, wobei sie einschließlich einer freien Endkante jedes Endflansches (12, 13) der Trommel (10) festgelegt ist.

9. Anordnung nach Anspruch 7, **dadurch gekennzeichnet, daß** die elektrischen Isoliermittel (40) ein einzelnes elektrisches Isolierband (40a) umfassen, das einstückig die beiden Halteabschnitte (41, 42) und den Abdeckabschnitt (43) aufweist.

10. Anordnung nach Anspruch 9, **dadurch gekennzeichnet, daß** der Abdeckabschnitt (43) von einem einzelnen Ansatz eines elektrischen Isolierbandes (40a) festgelegt ist, der zwischen den beiden Halteabschnitten (41, 42) verläuft.

11. Anordnung nach Anspruch 10, **dadurch gekennzeichnet, daß** die Halteabschnitte (41, 42) aneinander durch einen Basishalteabschnitt (44) befestigt sind, zur Anlage gegen den zentralen Wickelkern (11) der Trommel (10), wobei die elektrischen Isoliermittel (40) von zwei Abdeck-Endansätzen (43a) festgelegt werden, deren jeder von einem der beiden Halteabschnitte (41, 42) aus verläuft.

12. Anordnung nach Anspruch 7, **dadurch gekennzeichnet, daß** die elektrischen Isoliermittel (40) zwei elektrische Isolierbänder (40a) umfassen, deren jedes einen der Halteabschnitte (41, 42) und einen Abdeck-Endansatz (43a) der elektrischen Isoliermittel (40) ausbildet.

13. Anordnung nach Anspruch 12, **dadurch gekennzeichnet, daß** jedes elektrische Isolierband (40a) den entsprechenden Halteabschnitt (41, 42) gegen eine Außenfläche (12b, 13b) eines Endflansches (12, 13) der Trommel (10) anklebt.

14. Anordnung nach Anspruch 12, **dadurch gekennzeichnet, daß** eines der elektrischen Isolierbänder (40a) mit seinem Halteabschnitt (41, 42) an einer Innenfläche eines der Endflansche (12, 13) der Trommel (12) anklebt, wobei der Halteabschnitt (41, 42) des anderen elektrischen Isolierbandes (40a) an der Außenfläche (12b, 13b) des anderen Endflansches (12, 13) der Trommel (10) angeklebt ist.

15. Anordnung nach einem der Ansprüche 7 bis 14, **dadurch gekennzeichnet, daß** sie weiterhin ein zusätzliches elektrisches Isolierband (50) zur Anlage an der Spulenwicklung (20) in Richtung der Wicklung umfaßt, wobei es mit einem Teil seiner Erstreckung an dem Abdeckabschnitt (43) der elektrischen Isoliermittel (40) in dieser axialen Erstreckung der Spulenwicklung (20) angeklebt ist.

## Revendications

1. Procédé d'isolement électrique d'une bobine d'un dispositif électrique du type comprenant : un rouleau (10) ayant un moyeu central (11) portant des brides d'extrémité (12, 13) ; un enroulement de bobine (20) ; et une pile externe de lamelles (30), **caractérisé en ce qu'**il comprend, avant une étape de montage de la pile de lamelles (30) sur le rouleau (10), les étapes consistant à :
- fournir un moyen d'isolement électrique (40) comprenant au moins un ruban isolant électrique (40a), qui est autocollant sur au moins une face, ledit moyen d'isolement électrique (40) présentant deux portions de retenue (41, 42), chacune susceptible d'être collée et retenue sur la face interne (12a, 13a) ou la face externe (12b, 13b) d'une bride d'extrémité respective (12, 13) du rouleau (10) ; et une portion de recouvrement (43) jointe auxdites portions de retenue (41, 42), pour être collée à l'enroulement de bobine (20) et dimensionnée de manière à recouvrir la totalité de l'extension axiale de l'enroulement de bobine (20), dans chacune des deux régions opposées de celui-ci, en regard d'une portion adjacente de la pile de lamelles (30) ;
- coller chacune desdites portions de retenue (41, 42) du moyen d'isolement électrique (40) à une bride d'extrémité (12, 13) du rouleau (10) ; et
- coller, après formation de l'enroulement de bobine (20), la portion de recouvrement (43) du moyen d'isolement électrique (40) sur ladite extension axiale dudit enroulement de bobine (20).

2. Procédé selon la revendication 1, **caractérisé en ce qu'**il comprend la séquence d'étapes consistant à :
a) aménager l'enroulement de bobine (20) dans le moyeu central (11) jusqu'à obtenir un remplissage souhaité du rouleau (10) ;
b) loger la portion de recouvrement (43) d'un seul ruban d'isolement électrique (40a) sur l'enroulement de bobine (20) ; et
c) coller chaque portion de retenue (41, 42) d'un seul ruban d'isolement électrique (40a) contre une face externe (12b, 13b) d'une bride d'extrémité respective (12, 13) du rouleau (10).

3. Procédé selon la revendication 1, **caractérisé en ce qu'**il comprend la séquence d'étapes consistant à :
a) coller chaque portion de retenue (41, 42) contre une face interne (12a, 13a) d'une bride d'extrémité respective (12, 13) du rouleau (10) ;
b) aménager l'enroulement de bobine (20) dans le moyeu central (11) jusqu'à obtenir un remplissage souhaité du rouleau (10) ; et
c) loger la portion de recouvrement (43) d'un seul ruban isolant électrique (40a) sur l'enroulement de bobine (20).

4. Procédé selon la revendication 3, **caractérisé en ce que** les portions de retenue (41, 42) sont jointes l'une à l'autre par une portion de retenue de base (44) pour être logées contre le moyeu central (11) du rouleau (10) et la portion de recouvrement (43) est définie par deux extensions de recouvrement d'extrémité (43a) de chacune des deux portions de retenue (41, 42), ledit procédé comprenant, après l'étape « a », les étapes intermédiaires suivantes consistant à :
a1) retenir l'extension de recouvrement d'extrémité (43a) de chaque portion de recouvrement (43) du ruban isolant électrique (40a) contre une face externe (12b, 13b) de la bride d'extrémité (12, 13), dans la face interne (12a, 13a) de laquelle est collée une portion de retenue respective (41, 42) du seul ruban isolant électrique (40a) ;
b1) libérer l'extension de recouvrement d'extrémité (43a) de chaque portion de recouvrement (43) du ruban isolant électrique (40a) de la surface externe (12b, 13b) de ladite bride d'extrémité (12, 13) du rouleau (10) ;
b2) amener l'extension de recouvrement d'extrémité (43a) de chaque portion de recouvrement (43) à un déplacement angulaire autour de la portion de retenue (41, 42) correspondante collée à la bride d'extrémité (12, 13) du rouleau (10).

5. Procédé selon la revendication 1, **caractérisé en ce que** le moyen isolant électrique (40) comprend deux rubans isolants électriques (40a), chacun présentant l'une des portions de retenue (41, 42) et une extension de recouvrement d'extrémité (43a) du moyen isolant électrique (40), le procédé comprenant la séquence d'étapes consistant à :
a) aménager l'enroulement de bobine (20) dans le moyeu central (11) jusqu'à obtenir un remplissage souhaité du rouleau (10) ;
b) loger l'extension de recouvrement d'extrémité (43a) de chaque ruban isolant électrique (40a) sur l'enroulement de bobine (20) de sorte que lesdites extensions de recouvrement d'extrémité (43a) chevauchent ladite extension axiale de l'enroulement de bobine (20) ; et
c) coller la portion de retenue (41, 42) de chaque ruban isolant électrique (40a) contre une face externe (12b, 13b) d'une bride d'extrémité adjacente et respective (12, 13) du rouleau (10).

6. Procédé selon la revendication 3, **caractérisé en ce qu'**il comprend, après l'étape « a », les étapes intermédiaires supplémentaires consistant à :
a1) loger et retenir ladite extension de recouvrement d'extrémité (43a) de chaque ruban isolant électrique (40a) contre une face externe (12b, 13b) de la bride d'extrémité (12, 13), dans la face interne (12a, 13a) de laquelle est collée la portion de retenue (41, 42) du ruban isolant électrique respectif (40a) ;
b1) libérer l'extension de recouvrement d'extrémité (43a) de chaque ruban isolant électrique (40a) de la face externe (12b, 13b) de la bride d'extrémité respective (12, 13) du rouleau (10) ;
b2) amener l'extension de recouvrement d'extrémité (43a) à un déplacement angulaire autour de la portion de retenue correspondante (41, 42) collée à la bride d'extrémité (12, 13) jusqu'au logement de chacune desdites extensions de recouvrement d'extrémité (43a) sur l'enroulement de bobine (20).

7. Aménagement pour isoler électriquement une bobine d'un dispositif électrique du type qui comprend :
un rouleau (10) ayant un moyeu central (11) portant des brides d'extrémité (12, 13) ; un enroulement de bobine (20) ; et une pile de lamelles externes (30), **caractérisé en ce qu'**il comprend un moyen d'isolement électrique (40) comprenant au moins un ruban isolant électrique (40a), qui est autocollant sur au moins une face, ledit moyen d'isolement électrique (40) présentant deux portions de retenue (41, 42),
chacune collée et retenue sur la face interne (12a, 13a) ou la face externe (12b, 13b) d'une bride d'extrémité respective (12, 13) ; et une portion de recouvrement (43) jointe auxdites portions de retenue (41, 42) à coller à l'enroulement de bobine (20), et dimensionnée pour recouvrir la totalité de l'extension axiale de l'enroulement de bobine (20), dans chacune des deux régions opposées de celui-ci, en regard d'une portion adjacente de la pile de lamelles (30).

8. Aménagement selon la revendication 7, **caractérisé en ce que** l'enroulement de bobine (20) dans le moyeu central (11) définit une surface qui coïncide sensiblement avec une surface latérale périphérique du rouleau (10), définie comme comprenant un bord d'extrémité libre de chaque bride d'extrémité (12, 13) dudit rouleau (10).

9. Aménagement selon la revendication 7, **caractérisé en ce que** le moyen d'isolement électrique (40) comprend un seul ruban isolant électrique (40a) présentant, dans une seule pièce, les deux portions de retenue (41, 42) et la portion de recouvrement (43).

10. Aménagement selon la revendication 9, **caractérisé en ce que** la portion de recouvrement (43) est définie par une seule extension d'un ruban isolant électrique (40a) qui s'étend entre les deux portions de retenue (41, 42).

11. Aménagement selon la revendication 10, **caractérisé en ce que** les portions de retenue (41, 42) sont jointes l'une à l'autre par une portion de retenue de base (44) à loger contre le moyeu central (11) du rouleau (10), le moyen d'isolement électrique (40) étant défini par deux extensions de recouvrement d'extrémité (43a), chacune s'étendant de l'une des deux portions de retenue (41, 42).

12. Aménagement selon la revendication 7, **caractérisé en ce que** le moyen d'isolement électrique (40) comprend deux rubans isolants électriques (40a), chacun présentant l'une des portions de retenue (41, 42) et une extension de recouvrement d'extrémité (43a) du moyen d'isolement électrique (40).

13. Aménagement selon la revendication 12, **caractérisé en ce que** chaque ruban isolant électrique (40) a la portion de retenue respective (41, 42) qui est collée contre une face externe (12b, 13b) d'une bride externe (12, 13) du rouleau (10).

14. Aménagement selon la revendication 12, **caractérisé en ce que** l'un des rubans isolants électriques (40a) a sa portion de retenue (41, 42) collée à une face interne de l'une des brides d'extrémité (12, 13) du rouleau (10), la portion de retenue (41, 42) de l'autre ruban isolant électrique (40a) étant collée à la face externe (12b, 13b) de l'autre bride d'extrémité (12, 13) du rouleau (10).

15. Aménagement selon l'une quelconque des revendications 7 à 14, **caractérisé en ce qu'**il comprend en outre un ruban isolant électrique supplémentaire (50) à loger sur l'enroulement de bobine (20), dans la direction dudit enroulement, ayant une partie de son extension qui est collée sur la portion de recouvrement (43) du moyen d'isolement électrique (40) dans ladite extension radiale de l'enroulement de bobine (20).
